# FASCICULE DE BREVET EUROPEEN

(11) **EP 3 463 703 B1**
(45) Date de publication et mention de la délivrance du brevet: **10.03.2021**
(21) Numéro de dépôt: 17734784.6
(22) Date de dépôt: 02.06.2017
(51) Int. Cl.: B09B 3/00, C03C 3/00, E04G 23/00

(54) **PROCEDE DE DEPOLLUTION D'UN SITE CONTAMINE PAR DE L'AMIANTE**
VERFAHREN ZUR DEKONTAMINATION EINES MIT ASBEST KONTAMINIERTEN STANDORTES
METHOD FOR DECONTAMINATING A SITE CONTAMINATED WITH ASBESTOS

(30) Priorité: 03.06.2016 FR 1655057
(43) Date de publication de la demande: 10.04.2019
(73) Titulaire: Soletanche Freyssinet, 92500 Rueil Malmaison (FR)
(72) Inventeur: SARRAF, Riad, 50460 Querqueville (FR)
(74) Mandataire: Plasseraud IP
(86) Numéro de dépôt international: PCT/FR2017/051397
(87) Numéro de publication internationale: WO 2017/207946

(56) Documents cités:
- EP-A1- 0 853 959
- EP-A1- 2 067 539
- EP-A1- 2 133 158
- EP-A1- 2 717 270
- FR-A1- 2 749 523

## Description

La présente invention concerne un procédé de dépollution d'un site contaminé par de l'amiante, par retrait et traitement d'un matériau qui comprend des particules d'amiante, et qui est présent sur le site à dépolluer.

De nombreux sites doivent être décontaminés par rapport à des matériaux ou des produits à base d'amiante qui ont été utilisés antérieurement pour l'aménagement de ces sites, ou pour des dispositifs ou des équipements qui sont installés dans ces locaux. En particulier, les matériaux amiantés peuvent avoir été utilisés comme matériaux de construction, tels que l'amiante-ciment, ou mis en œuvre sous forme de flocage, notamment dans des buts d'isolation thermique ou de calorifugeage, ou dans des équipements industriels sous forme de textiles, de matériaux de renfort ou de friction, etc. Les sites concernés peuvent être très variables : immeubles, installations industrielles, éventuellement nucléaires, navires...

Lorsque le retrait des matériaux à base d'amiante n'est pas envisagé, parce que ces matériaux restent indispensables ou pour limiter le coût de dépollution du site, il est connu de recouvrir les matériaux susceptibles de libérer des particules d'amiante par un film qui constitue une barrière efficace contre la libération des particules d'amiante. En particulier, le document EP 0 853 959 A1 propose des compositions liquides qui comprennent au moins un composé de type organosiloxane ou alkoxyde métallique, ou une suspension colloïdale de silice, un composé organosilicique, un monomère et un initiateur de radicaux libres. De telles compositions peuvent être pulvérisées sur un matériau qui comprend des particules d'amiante, et forment un film vitreux qui recouvre le matériau. En outre, l'amiante qui se trouve à la surface du matériau traité est transformée chimiquement à froid par la composition liquide, par greffage ou pontage de molécules de silice ou d'oxydes métalliques sur les sites d'oxyde de silicium, de magnésium, de fer et/ou de calcium des particules d'amiante.

Par ailleurs, il est aussi connu de retraiter des matériaux qui comprennent des particules d'amiante par vitrification à haute température. Pour cela, les matériaux à particules d'amiante sont additionnés de composés à base de chaux, d'oxyde ferrique, de silice, d'alumine et/ou d'oxyde de bore pour obtenir approximativement une composition cible qui forme un verre après fusion et refroidissement. En fonction de la température atteinte, les particules d'amiante sont piégées dans la matrice vitreuse, ou ont été fondues ou dissoutes. Un tel procédé de retraitement par vitrification est compatible avec des déchets amiantés qui sont radioactifs. Le matériau vitreux qui résulte de la vitrification, après refroidissement, peut être conditionné, stocké et/ou valorisé conformément à la réglementation en vigueur.

Le document EP 2 067 539 divulgue de recouvrir un matériau qui contient des particules d'amiante avec une solution concentrée de silicates.

Par ailleurs, le document EP 2 133 158 divulgue de projeter un fondant sur un matériau qui contient des particules d'amiante, avant de le retirer.

A partir de cette situation, un but de la présente invention consiste à proposer un nouveau procédé de dépollution de sites contaminés par de l'amiante, qui soit sans danger pour les opérateurs de dépollution, d'un prix de revient limité, compatible avec de multiples configurations des sites ou des dispositifs contaminés, et qui aboutisse à une suppression totale des risques sanitaires causés par l'amiante retirée.

Un but complémentaire est de fournir un tel procédé qui soit compatible avec des matériaux amiantés qui sont en plus contaminés par des éléments radioactifs, ou susceptibles d'être contaminés par des éléments radioactifs, par exemple de tels matériaux qui proviennent d'installations nucléaires.

Pour atteindre certains au moins de ces buts ou d'autres, l'invention propose un procédé de dépollution d'un site contaminé par de l'amiante, par retrait et traitement d'un matériau qui comprend des particules d'amiante et qui est présent sur le site à dépolluer, ce procédé comprenant les étapes suivantes qui sont effectuées dans l'ordre /1/ à /3/ :
/1/ sur le site à dépolluer, appliquer une composition filmogène sur le matériau qui comprend les particules d'amiante, la composition filmogène étant adaptée pour former par séchage un film sur le matériau, de façon à constituer une barrière contre une libération possible et probable de particules d'amiante provenant du matériau, notamment une libération qui interviendrait avant et au cours de son retrait ;
/2/ extraire le matériau isolé par le film, hors du site à dépolluer ; puis
/3/ chauffage d'un mélange qui contient initialement un fondant et le matériau qui comprend les particules d'amiante, avec le film, le fondant comprenant au moins des composés de type silicates et des composés de type aluminates, notamment de sels alcalins, pour produire un matériau final dans lequel les particules d'amiante sont piégées ou ont été fondues.

Un procédé conforme à l'invention regroupe donc une passivation du matériau à particules d'amiante, sur le site à l'étape /1/, une dépollution du site par le retrait du matériau à particules d'amiante à l'étape /2/, et la suppression des risques sanitaires liés au matériau à particules d'amiante qui a été retiré, par vitrification à l'étape /3/. Le procédé assure donc une réhabilitation du site et une élimination définitive de l'amiante initialement en place puis récupérée.

En outre, le film formant barrière pour les particules d'amiante est mis en œuvre à l'étape /1/ avant que le matériau qui contient les particules d'amiante soit manipulé et/ou exposé à des courants d'air, ou à des flux de gaz ou de liquides qui peuvent être mis en œuvre pour le retrait de l'étape /2/. Ainsi, des opérateurs qui interviennent sur le site pour sa dépollution sont exposés au minimum aux particules d'amiante présentes initialement ou susceptibles d'être libérées lorsque le matériau est retiré puis extrait du site.

Si le matériau qui comprend les particules d'amiante, tel qu'il est présent sur le site à dépolluer avant l'étape /1/, est poreux, alvéolaire, présente des anfractuosités ou est fibreux, la composition filmogène est préférablement adaptée pour pénétrer la porosité, les alvéoles, les anfractuosités et/ou enrober les fibres, de façon à constituer une barrière plus efficace contre la libération ultérieure des particules d'amiante.

Le fondant qui est ajouté au matériau extrait du site est de préférence sélectionné pour faciliter l'obtention du matériau final à l'étape /3/, notamment en réduisant la température du chauffage qui est nécessaire pour piéger ou fondre les particules d'amiante dans le matériau final. Avantageusement, le fondant peut être à base de, ou obtenu à partir de particules de silice et d'alumine, de ciment ou de béton liquide.

Selon une caractéristique supplémentaire de l'invention, une partie au moins du fondant est appliquée sur le matériau qui comprend les particules d'amiante, déjà recouvert par le film qui constitue la barrière contre la libération de particules d'amiante, sur le site à dépolluer entre les étapes /1/ et /2/. Le fondant reste alors au moins en partie collé au film, puis le matériau recouvert par le film et par du fondant est extrait du site à dépolluer à l'étape /2/. Autrement dit, le fondant est appliqué sur le matériau à particules d'amiante après la composition filmogène, préférablement avant que le matériau soit manipulé par un opérateur de la dépollution. La manipulation du matériau pour son retrait à l'étape /2/ peut alors être facilitée par l'ajout du fondant, notamment dans le cas d'un matériau qui a été déposé par flocage.

Lorsqu'une partie au moins du fondant est ainsi ajoutée avant l'extraction du matériau hors du site, elle peut être appliquée par pulvérisation à froid sur le matériau qui comprend les particules d'amiante, celui-ci étant déjà recouvert par le film qui constitue la barrière contre la libération de particules d'amiante. Dans ce cas, la partie de fondant peut avantageusement être liquide ou combinée avec une phase liquide lors de sa pulvérisation sur le matériau qui comprend les particules d'amiante, et qui est déjà recouvert par le film. Son adhésion sur le film qui recouvre le matériau à particules d'amiante peut ainsi être meilleure.

Lorsque du fondant est ajouté sur le site à dépolluer avant l'extraction du matériau hors du site, conformément à l'invention, une quantité complémentaire de fondant peut alors être ajoutée ultérieurement, après l'étape /2/, au matériau qui comprend les particules d'amiante, recouvert par le film qui constitue la barrière contre la libération de particules d'amiante, et qui a déjà additionné une première fois avec du fondant sur le site à dépolluer. Le fondant de la quantité complémentaire et le fondant qui a été additionné sur le site à dépolluer peuvent avoir des compositions respectives qui sont identiques ou différentes. En particulier, le fondant de la quantité complémentaire peut être sec ou pulvérulent, pour faciliter son mélange et/ou diminuer la consommation énergétique du chauffage de l'étape /3/.

En outre et de façon générale, l'un des perfectionnements suivants de l'invention peut être mis en œuvre, seul ou en combinaison avec un ou plusieurs autres :
- à l'étape /1/, la composition filmogène peut être appliquée sur le matériau qui comprend les particules d'amiante, par pulvérisation, trempage ou versement, puis le film peut être formé par évaporation d'un solvant de la composition filmogène, ou par polymérisation d'au moins un composé de cette composition filmogène, ou par combinaison d'une évaporation de composante liquide avec une polymérisation d'au moins un composé de la composition filmogène ;
- à l'étape /1/, la composition filmogène peut comprendre au moins un composé organosilicique ;
- à l'étape /3/, le chauffage peut être produit au moins en partie au moyen d'un four qui est pourvu d'une torche à arc soufflé ou d'électrodes adaptées pour produire un arc de décharge électrique ; et
- le matériau final qui est issu de l'étape /3/, après refroidissement, peut être un verre, une vitrocéramique, une matrice vitreuse à inclusions hétérogènes, ou une roche synthétique.

D'autres particularités et avantages de la présente invention apparaîtront dans la description ci-après d'exemples de mise en œuvre non limitatifs, en référence aux dessins suivants qui sont annexés :
- la figure 1 est un diagramme des étapes d'un procédé de dépollution conforme à l'invention ; et
- la figure 2 illustre schématiquement un état intermédiaire du site à dépolluer, au cours d'un procédé de dépollution conforme à l'invention.

Le site contaminé peut être une partie d'un bâtiment dont certaines installations ont été traitées par flocage, par exemple certaines de ses parois pour les rendre coupe-feu. Pour cela, un matériau qui comprend des particules d'amiante, enrobées dans un liant, a été déposé par pulvérisation ou projection sur ces parois. De façon connue, un délitement progressif d'un tel matériau peut se produire, par exemple à cause d'un vieillissement du liant, qui a pour effet de libérer dans l'air intérieur au bâtiment des particules d'amiante, réputées maintenant pour être nocives. L'objet d'une opération de dépollution conforme à l'invention consiste à retirer le matériau amianté, l'extraire hors du bâtiment et le traiter de façon à supprimer sa nocivité, afin de ne pas polluer un nouvel endroit où le matériau amianté serait stocké alors qu'il continuerait à libérer des particules d'amiante.

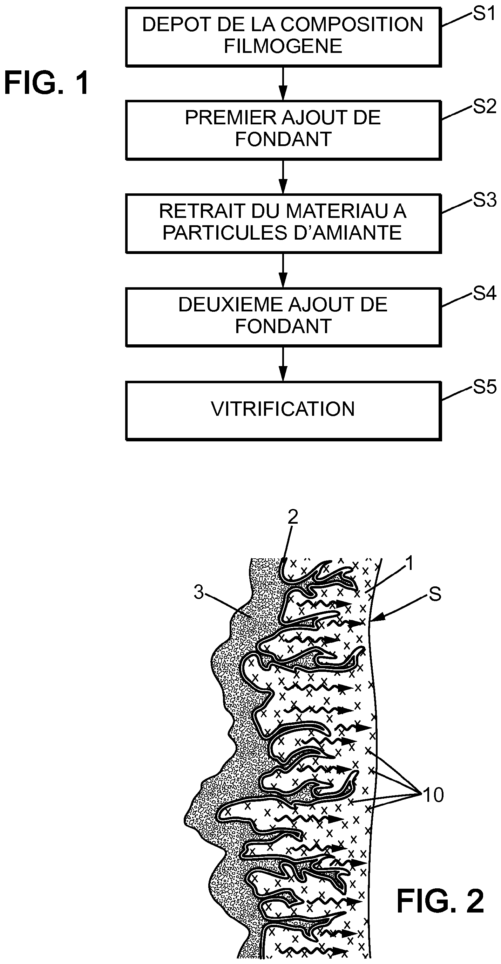

Dans une première étape de l'opération de dépollution, référencée S1 sur la figure 1, un film est formé *in situ,* c'est-à-dire sur le matériau qui contient les particules d'amiante, de préférence sans que le matériau soit déplacé, décollé, retiré, ni soumis à des flux importants d'air ou d'eau avant que le film soit formé. En effet, la fonction du film est de former une barrière efficace contre la libération de particules d'amiante par le matériau amianté, sans renforcer le dégagement de particules d'amiante du fait de l'intervention sur le matériau. Pour cela, le film est destiné à recouvrir le matériau amianté, pour former une enveloppe sur celui-ci qui est étanche aux particules.

Le film formant barrière contre la libération des particules d'amiante peut être formé par pulvérisation d'une composition filmogène sur le matériau amianté, avec une densité de dépôt qui est suffisante pour assurer que la surface libre du matériau amianté soit supprimée dans une grande proportion, voire en très grande proportion. Par composition filmogène, on entend une composition, le plus souvent liquide, qui est destinée à former le film de recouvrement du matériau amianté, c'est-à-dire le matériau de flocage dans le cas présent. La composition filmogène est de préférence adaptée pour produire mouiller la surface du matériau amianté, et pour sécher en formant un film continu qui enveloppe ce matériau de façon permanente, afin d'y retenir les particules d'amiante. La fonction de la composition filmogène est donc celle d'un vernis. Si le matériau qui contient les particules d'amiante est poreux ou fibreux, la composition filmogène sera préférablement adaptée pour imprégner la structure poreuse ou fibreuse. Sur la figure 2, les flèches ondulées symbolisent une telle diffusion de la composition filmogène à l'intérieur du matériau amianté. Le séchage du film repose préférablement sur le principe de l'évaporation d'un solvant de la composition filmogène, de préférence à température ambiante, ou par polymérisation d'au moins un composé monomère qui est contenu initialement dans cette composition, tel que du méthacrylate de méthyle. Les compositions filmogènes citées dans le document EP 0 853 959 A1, et qui ont été rappelées au début de cette description, peuvent être utilisées avantageusement. En effet, certaines d'entre elles sont particulièrement adaptées pour la suite du procédé de l'invention, en ce qu'elles peuvent constituer un premier apport d'éléments chimiques tels que le silicium, l'aluminium, le fer, le bore ou le phosphore, qui pourront aussi entrer dans la composition du fondant ajouté ultérieurement.

La pulvérisation de la composition filmogène en phase liquide, sous pression ou en utilisant de l'air comprimé, est une méthode d'application rapide, économique, et adaptée à des formes diverses et variées du matériau qui contient les particules d'amiante, y compris des formes de revêtement par flocage.

A l'issue du séchage de la composition filmogène, le matériau qui contient les particules d'amiante est enveloppé dans le film, si bien que les surfaces de ce matériau sont recouvertes et ne peuvent plus libérer de particules d'amiante.

Dans une deuxième étape de l'opération de dépollution, qui est référencée S2 sur la figure 1, un fondant est ajouté sur le matériau qui contient les particules d'amiante, par-dessus le film. Grâce au film, cette deuxième étape ne provoque pas de libération de particules d'amiante. La fonction du fondant est de faciliter la transformation ultérieure du matériau par chauffage, notamment pour produire une phase liquide à température moins élevée. Cette phase liquide constituera une matrice dense dans laquelle pourront être noyés certains composants du matériau qui contient les particules d'amiante, et surtout les particules d'amiante elles-mêmes. La composition du fondant est sélectionnée pour présenter une température de fusion qui soit basse, possiblement avec une capacité de dissoudre les particules d'amiante dans le liquide de fusion. Pour certains matériaux amiantés, tels que des matériaux de construction ou des éléments mécaniques à base d'amiante, la composition du fondant peut tenir compte de celle du matériau source de la pollution du site, pour obtenir une composition globale dont la température de fusion est optimisée pour être moins élevée. De préférence, des composants du fondant sont de la silice ou des composés silicates, de l'alumine ou des composées aluminates, et optionnellement de la chaux, de préférence éteinte. Par exemple, ces composants peuvent être introduits dans le fondant sous forme de particules de silice et d'alumine, de ciment ou de béton liquide. Lorsque des composés silicatés et/ou aluminatés sont utilisés dans le fondant, ceux-ci sont préférentiellement combinés avec des sels alcalins. Le fondant est préférablement hétérogène, avec des grains ou des granulats solides qui sont répartis dans un liquide vecteur. De cette façon, le fondant est déposé sur le matériau qui contient les particules d'amiante, par-dessus le film, encore *in situ* avant que le matériau soit déplacé, décollé ou retiré. Le dépôt peut être effectué par pulvérisation du fondant, par exemple à l'aide d'une pompe à haute pression, ou en utilisant de l'air comprimé. La composition du fondant est adaptée pour qu'il adhère sur le matériau qui contient les particules d'amiante, et surtout sur le film à fonction de barrière contre la libération des particules d'amiante.

Certains éléments chimiques sont très efficaces pour permettre la vitrification ultérieure, comme le silicium et le bore par leur seule combinaison avec de l'oxygène (oxydes). Ces oxydes formateurs, qui formeront le squelette du verre et qui peuvent aussi être contenus dans la composition filmogène, peuvent être combinés à d'autres éléments modificateurs tels que des fondants. Selon l'enseignement des documents EP0 853 959 A1 et EP2717270A1 :
- les oxydes formateurs peuvent être choisis parmi des organosiloxanes de formule Si(OR)₄, dans laquelle R est un (C₁-C₄)-alkyle, un alcoxyde métallique de formule M(OR)ₘ, où M est un métal choisi parmi le bore (B), le titane (Ti), le fer (Fe), l'aluminium (Al), le magnésium (Mg), le vanadium (V), le zirconium (Zr), le tungstène (W), le phosphore (P) et le lanthane (La), m désignant la valence du métal M, ou bien l'oxyde formateur peut être et une suspension colloïdale de silice (SiO₂); et
- les fondants peuvent correspondre à des oxydes alcalins, dont les plus utilisés sont l'oxyde de sodium (Na₂O), l'oxyde de potassium (K₂O), l'oxyde de magnésium (MgO), l'oxyde de lithium (Li₂O), mais les fondants peuvent aussi être du carbonate de lithium (LiCO₃), ou de la fluorine (CaF₂).

La composition filmogène peut comprendre :
- au moins un mélange d'au moins un composé organosilicique de formule : [X-(CH2)ₙ]ₓ-Si(OR)₄₋ₓ dans laquelle :
   ∘ R est encore un (C₁-C₄)-alkyle ;
   ∘ X est un radical sulfhydryle, amino, isocyanato, (méth)acryloyle, vinyle, phényle, anilino, uréido, thiocyanato, nitrilo, ou époxy ou un groupe contenant un tel radical ;
   ∘ n est un nombre entier de 0 à 3 ; et
   ∘ x est un nombre entier de 1 à 3 ;
- au moins un monomère à base d'éthylène glycol, d'acide acrylique ou méthacrylique, maléique ou phtalique, de vinyle, d'acrylamide ou d'oxyde d'éthylène, de méthylène ou de polyméthylène ;
- au moins un initiateur de radicaux libres ; et
- éventuellement, des fondants choisis parmi ceux cités ci-dessus.

Une durée de séchage du fondant ainsi déposé peut être prévue. La figure 2 montre une surface S du bâtiment à dépolluer, après les étapes S1 et S2. Dans cette figure, les références 1, 2 et 3 désignent respectivement le matériau qui contient les particules d'amiante, le film et le fondant qui a été déposé par-dessus le film. La référence 10 désigne les particules d'amiante dans le matériau 1.

L'ajout du fondant *in situ,* avant que le matériau qui contient les particules d'amiante soit déplacé pour son retrait et son enlèvement hors du site, peut permettre de faciliter les opérations de déplacement et éventuellement aussi de décollage du matériau, notamment lorsqu'il s'agit d'un matériau de flocage. A l'étape S3 de la figure 1, le matériau qui contient les particules d'amiante est retiré de son support ou de son lieu d'installation dans le bâtiment à dépolluer, puis emporté en dehors du bâtiment.

Du fondant peut être additionné à deux reprises au matériau qui contient les particules d'amiante. Le premier apport de fondant est effectué *in situ* sur le matériau qui contient les particules d'amiante, avant que ce matériau soit retiré de son support ou de son lieu d'installation dans le bâtiment à dépolluer, en même temps que le fondant adhéré avec lui, comme déjà décrit. Ensuite, un second apport de fondant, supplémentaire par rapport au premier apport, peut être effectué après le retrait du matériau qui contient les particules d'amiante avec le fondant du premier apport. Ce second apport correspond à l'étape S4 de la figure 1. L'exigence d'adhésion sur le film n'est alors pas nécessaire pour le fondant du second apport. Ce dernier peut alors être sous forme sèche, possiblement sous forme pulvérulente. Un avantage d'une telle méthode à deux apports successifs de fondant est de réduire la quantité de liquide totale qui est contenue dans le mélange à chauffer, et possiblement aussi la quantité de composés organiques qui est aussi contenue dans ce mélange. Il n'est donc pas nécessaire que les fondants des premier et second apports aient des compositions identiques.

Le mélange qui est récupéré, comprenant le matériau à particules d'amiante qui a été extrait, avec le film à fonction de barrière contre la libération de particules d'amiante, et le fondant ajouté en une ou deux fois, est alors chauffé à haute température dans un four. De préférence, l'énergie thermique peut être au moins partiellement apportée par une ou plusieurs torches à arc soufflé, ou par un ensemble d'électrodes qui sont adaptées pour produire un arc de décharge électrique, par exemple des électrodes de carbone. De telles technologies de chauffage sont supposées connues de l'Homme du métier, si bien qu'elles ne sont pas décrites à nouveau ici.

Lors du chauffage de l'étape S5 (figure 1), les composés organiques sont détruits et évacués au moins partiellement sous forme gazeuse, de même que l'eau qui peut être contenue dans le mélange. De façon connue, ces dégagements gazeux peuvent être retraités en tant que nécessaire, pour neutraliser leur éventuelle acidité ou basicité, et/ou pour en recondenser une partie, etc.

Le chauffage peut être effectué de façon à faire fondre le fondant, et ainsi former temporairement une matrice liquide qui se solidifie lors du refroidissement, et dans laquelle des résidus du matériau qui contenait initialement les particules d'amiante, et notamment celles-ci, sont piégées. Un tel matériau final est dense, de façon à réduire un encombrement lors de son entreposage ou de son stockage ultérieur. Ce matériau final est couramment appelé vitrifiat. Pour cela, la température maximale qui est atteinte par le mélange lors du chauffage de l'étape S5 est préférablement supérieure à 900°C, voire supérieure à 1200°C.

Dans une variante, le chauffage de l'étape S5 peut être effectué de sorte que le mélange atteigne une température suffisante pour que les particules d'amiante soient elles-mêmes fondues et/ou dissoutes dans la matrice liquide produite par le fondant. Pour cela, la température maximale qui est atteinte par le mélange lors du chauffage peut être préférablement supérieure à 1200°C, éventuellement avec des périodes à plus de 1700°C, par exemple lorsqu'une torche à arc soufflé ou des électrodes à arc électrique sont utilisées.

De façon générale, le matériau final qui est issu de l'étape S5, après refroidissement, est alors de type verre, vitrocéramique, matrice vitreuse à inclusions hétérogènes, ou roche synthétique. Ce matériau final ne présente aucun risque sanitaire lié à l'amiante, puisqu'aucune libération de particules d'amiante n'est plus possible. Il peut alors être stocké selon les réglementations en vigueur, ou revalorisé pour des applications particulières, telles que la construction de routes par exemple.

Il est entendu que l'invention peut être mise en œuvre en adaptant certains aspects secondaires de celle-ci par rapport à la description détaillée qui vient d'être donnée, tout en conservant certains au moins des avantages cités.

En particulier, il est rappelé qu'un procédé conforme à l'invention peut être utilisé pour des matériaux amiantés qui sont en plus contaminés par des éléments radioactifs.

## Revendications

1. Procédé de dépollution d'un site contaminé par de l'amiante, par retrait et traitement d'un matériau (1) qui comprend des particules d'amiante (10) et qui est présent sur le site à dépolluer, le procédé comprenant les étapes suivantes qui sont effectuées dans l'ordre /1/ à /3/:
/1/ sur le site à dépolluer, appliquer une composition filmogène sur le matériau (1) qui comprend les particules d'amiante (10), la composition filmogène étant adaptée pour former par séchage un film (2) sur ledit matériau, de façon à constituer une barrière contre une libération de particules d'amiante provenant du matériau ;
/2/ extraire le matériau (1) isolé par le film (2), hors du site à dépolluer; puis
/3/ chauffage d'un mélange qui contient initialement un fondant (3) et le matériau (1) qui comprend les particules d'amiante (10), avec le film (2), le fondant comprenant au moins des composés de type silicates et des composés de type aluminates, notamment de sels alcalins, pour produire un matériau final dans lequel les particules d'amiante sont piégées ou ont été fondues.
**caractérisé en ce qu'**une partie au moins du fondant (3) est appliquée sur le matériau (1) qui comprend les particules d'amiante (10), déjà recouvert par le film (2) qui constitue la barrière contre la libération de particules d'amiante, sur le site à dépolluer entre les étapes /1/ et /2/, le fondant restant au moins en partie collé au film, puis le matériau recouvert par le film et par du fondant est extrait du site à dépolluer à l'étape /2/.

2. Procédé selon la revendication 1, suivant lequel, à l'étape /1/, la composition filmogène est appliquée sur le matériau (1) qui comprend les particules d'amiante (10), par pulvérisation, trempage ou versement de ladite composition filmogène, puis le film (2) est formé après évaporation d'un solvant ou d'une composante liquide de ladite composition filmogène, ou par polymérisation d'au moins un composé de ladite composition filmogène, ou par combinaison d'une évaporation de composante liquide avec une polymérisation d'au moins un composé de ladite composition filmogène.

3. Procédé selon la revendication 1 ou 2, suivant lequel le fondant (3) est à base de, ou obtenu à partir de particules de silice et d'alumine, de ciment ou de béton liquide.

4. Procédé selon l'une quelconque des revendications précédentes, suivant lequel ladite une partie au moins du fondant (3) est appliquée par pulvérisation à froid sur le matériau (1) qui comprend les particules d'amiante (10), déjà recouvert par le film (2) qui constitue la barrière contre la libération de particules d'amiante.

5. Procédé selon l'une quelconque des revendications précédentes, suivant lequel ladite une partie au moins du fondant (3) est liquide ou combinée avec une phase liquide lors de la pulvérisation dudit fondant sur le matériau (1) qui comprend les particules d'amiante (10), et qui est déjà recouvert par le film (2).

6. Procédé selon l'une quelconque des revendications précédentes, suivant lequel une quantité complémentaire de fondant est ajoutée après l'étape /2/ au matériau (1) qui comprend les particules d'amiante (10), recouvert par le film (2) qui constitue la barrière contre la libération de particules d'amiante, et qui a déjà été additionné une première fois avec du fondant (3) sur le site à dépolluer, le fondant de la quantité complémentaire et le fondant additionné sur le site à dépolluer ayant des compositions respectives qui sont identiques ou différentes.

7. Procédé selon l'une quelconque des revendications précédentes, suivant lequel, à l'étape /1/, la composition filmogène comprend au moins un composé organosilicique.

8. Procédé selon l'une quelconque des revendications précédentes, suivant lequel, à l'étape /3/, le chauffage est produit au moins en partie au moyen d'un four pourvu d'une torche à arc soufflé ou d'électrodes adaptées pour produire un arc de décharge électrique.

9. Procédé selon l'une quelconque des revendications précédentes, suivant lequel le matériau final qui est issu de l'étape /3/, après refroidissement, est un verre, une vitrocéramique, une matrice vitreuse à inclusions hétérogènes, ou une roche synthétique.

## Patentansprüche

1. Verfahren zum Reinigen einer mit Asbest kontaminierten Stelle durch Entfernen und Behandeln eines Materials (1), das Asbestpartikel (10) umfasst und das an der zu reinigenden Stelle vorhanden ist, wobei das Verfahren die folgenden Schritte umfasst, die in der Reihenfolge /1/ bis /3/ durchgeführt werden:
/1/ an der zu reinigenden Stelle, Auftragen einer filmbildenden Zusammensetzung auf das Material (1), das die Asbestpartikel (10) umfasst, wobei die filmbildende Zusammensetzung geeignet ist, durch Trocknen einen Film (2) auf dem Material zu bilden, so dass eine Barriere gegen eine Freisetzung von Asbestpartikeln aus dem Material gebildet wird;
/2/ Extrahieren des durch den Film (2) isolierten Materials (1) von der zu reinigenden Stelle; dann
/3/ Erhitzen eines Gemisches, das zunächst ein Flussmittel (3) und das Material (1), das die Asbestpartikel (10) umfasst, zusammen mit dem Film (2) enthält, wobei das Flussmittel zumindest Verbindungen vom Silikat-Typ und Verbindungen vom Aluminat-Typ, insbesondere Alkalisalze, umfasst, um ein Endmaterial zu erzeugen, in dem die Asbestpartikel eingeschlossen sind oder geschmolzen wurden,
**dadurch gekennzeichnet, dass** zumindest ein Teil des Flussmittels (3) auf das Material (1) aufgebracht wird, das die Asbestpartikel (10) umfasst, die bereits von dem Film (2) bedeckt sind, der die Barriere gegen die Freisetzung von Asbestpartikeln bildet, an der zu reinigenden Stelle, zwischen den Schritten /1/ und /2/, wobei das Flussmittel zumindest teilweise an dem Film haften bleibt, und dann das von dem Film und dem Flussmittel bedeckte Material in Schritt /2/ von der zu reinigenden Stelle entfernt wird.

2. Verfahren nach Anspruch 1, wobei in Schritt /1/ die filmbildende Zusammensetzung auf das Material (1), das Asbestpartikel (10) umfasst, durch Sprühen, Tauchen oder Gießen der filmbildenden Zusammensetzung aufgebracht wird und dann der Film (2) nach Verdampfen eines Lösungsmittels oder eines flüssigen Bestandteils der filmbildenden Zusammensetzung oder durch Polymerisation von mindestens einer Verbindung der filmbildenden Zusammensetzung oder durch Kombination von Verdampfen des flüssigen Bestandteils mit Polymerisation von mindestens einer Verbindung der filmbildenden Zusammensetzung gebildet wird.

3. Verfahren nach Anspruch 1 oder 2, bei dem das Flussmittel (3) auf Kieselsäure- und Aluminiumoxidpartikeln, Zement oder Flüssigbeton basiert oder aus diesen gewonnen wird.

4. Verfahren nach einem der vorhergehenden Ansprüche, bei dem das Flussmittel (3) zumindest teilweise durch Kaltbesprühen auf das Material (1) aufgebracht wird, das die Asbestpartikel (10) umfasst, die bereits von dem Film (2) bedeckt sind, der die Barriere gegen die Freisetzung von Asbestpartikeln bildet.

5. Verfahren nach einem der vorhergehenden Ansprüche, bei dem zumindest ein Teil des Flussmittels (3) flüssig ist oder mit einer flüssigen Phase kombiniert wird, wenn das Flussmittel auf das Material (1) gesprüht wird, das die Asbestpartikel (10) umfasst und das bereits von dem Film (2) bedeckt ist.

6. Verfahren nach einem der vorhergehenden Ansprüche, wobei nach Schritt /2/ dem Material (1), das die Asbestpartikel (10) umfasst, das von dem Film (2) bedeckt ist, der die Barriere gegen die Freisetzung von Asbestpartikeln bildet, und das bereits ein erstes Mal an der zu reinigenden Stelle mit Flussmittel (3) versetzt wurde, eine ergänzende Menge an Flussmittel hinzugefügt wird, wobei das Flussmittel der ergänzenden Menge und das an der zu reinigenden Stelle hinzugefügte Flussmittel jeweils gleiche oder unterschiedliche Zusammensetzungen aufweisen.

7. Verfahren nach einem der vorhergehenden Ansprüche, wobei in Schritt /1/ die filmbildende Zusammensetzung mindestens eine Organosiliziumverbindung umfasst.

8. Verfahren nach einem der vorhergehenden Ansprüche, wobei in Schritt /3/ die Erwärmung zumindest teilweise mittels eines Ofens bewirkt wird, der mit einem Blaslichtbogenbrenner oder mit Elektroden versehen ist, die für die Erzeugung eines elektrischen Entladungsbogens angepasst sind.

9. Verfahren nach einem der vorhergehenden Ansprüche, wobei das Endmaterial, das sich aus Schritt /3/ ergibt, nach dem Abkühlen ein Glas, eine Glaskeramik, eine glasartige Matrix mit heterogenen Einschlüssen oder ein synthetisches Gestein ist.

## Claims

1. Method for decontaminating a site contaminated with asbestos, by removing and treating a material (1) which comprises asbestos particles (10) and which is present on the site to be decontaminated, the method comprising the following steps which are performed in the order /1/ to /3/:
/1/ on the site to be decontaminated, applying a film-forming composition on the material (1) which comprises the asbestos particles (10), the film-forming composition being adapted to form by drying a film (2) on said material, so as to constitute a barrier against a release of asbestos particles from the material;
/2/ extracting the material (1) isolated by the film (2), from the site to be decontaminated; then
/3/ heating a mixture which contains initially a flux (3) and the material (1) which comprises the asbestos particles (10), with the film (2), the flux comprising at least silicate type compounds and aluminate type compounds, particularly alkaline salts, to produce an end-material wherein the asbestos particles are trapped or have been melted,
**characterised in that** at least part of the flux (3) is applied onto the material (1) which comprises the asbestos particles (10), already coated with the film (2) which constitutes the barrier against the release of asbestos particles, on the site to be decontaminated between steps /1/ and /2/, the flux remaining at least partially adhered to the film, then the material coated with the film and with flux is extracted from the site to be decontaminated in step /2/.

2. Method according to claim 1, wherein, in step /1/, the film-forming composition is applied on the material (1) which comprises the asbestos particles (10), by spraying, dip-coating or pouring of said film-forming composition, then the film (2) is formed after evaporating a solvent or a liquid component of said film-forming composition, or by polymerising at least one compound of said film-forming composition, or by combining an evaporation of liquid component with a polymerisation of at least one compound of said film-forming composition.

3. Method according to claim 1 or 2, wherein the flux (3) is based on, or obtained from particles of silica and alumina, cement or liquid concrete.

4. Method according to any one of the preceding claims, wherein said at least part of the flux (3) is applied by cold-spraying onto the material (1) which comprises the asbestos particles (10), already coated with the film (2) which constitutes the barrier against the release of asbestos particles.

5. Method according to any one of the preceding claims, wherein said at least part of the flux (3) is liquid or combined with a liquid phase during the spraying of said flux onto the material (1) which comprises the asbestos particles (10), and which is already coated with the film (2).

6. Method according to any one of the preceding claims, wherein an additional quantity of flux is added after step /2/ to the material (1) which comprises the asbestos particles (10), coated with the film (2) which constitutes the barrier against the release of asbestos particles, and which was already added a first time with flux (3) on the site to be decontaminated, the flux of the additional quantity and the flux added on the site to be decontaminated having respective compositions which are identical or different.

7. Method according to any one of the preceding claims, wherein, in step /1/, the film-forming composition comprises at least one organosilicon compound.

8. Method according to any one of the preceding claims, wherein, in step /3/, the heating is produced at least in part by means of a furnace provided with a blown arc torch or electrodes adapted to produce an electric discharge arc.

9. Method according to any one of the preceding claims, wherein the end-material which is obtained from step /3/, after cooling, is a glass, a glass-ceramic, a vitreous matrix with heterogeneous inclusions, or a synthetic rock.
